# EUROPEAN PATENT APPLICATION

(11) **EP 4 730 025 A1**
(43) Date of publication of application: **22.04.2026**
(21) Application number: 24306750.1
(22) Date of filing: 18.10.2024
(51) Int. Cl.: G02F 1/1503, C09K 9/02, G02F 1/1514, G02F 1/1516

(54) **ELECTROCHROMIC DEVICE WITH IMPROVED COLOR STABILITY**

(71) Applicant: Essilor International, 94220 Charenton-Le-Pont (FR)
(72) Inventor: BERIT-DEBAT, Fabien, 31400 TOULOUSE (FR); ARCHAMBEAU, Samuel, 31300 TOULOUSE (FR); BALLET, Jérôme, 31770 COLOMIERS (FR)
(74) Representative: Plasseraud IP

(57) **Abstract**

The present invention discloses a device comprising an electrochromic cell comprising an electrochromic formulation, wherein the electrochromic formulation comprises:
- A solvent,
- An ionic electrochromic compound CO dissolved in the electrochromic formulation, and
- A lithium salt dissolved or dispersed in the electrochromic formulation.
said device further comprising means to apply electric energy to the electrochromic cell, said means being configured to be able to maintain the electrochromic cell in at least two states SO and S1, wherein:
- In SO, no electric energy is applied to the electrochromic cell,
- In SI, at least part of compound CO present in state SO is excited into a compound CO*, wherein CO and CO* do not have the same color.

## Description

### Technical field

The present disclosure belongs to the field of electrochromic (EC) devices. The device of the present disclosure may be an electrochromic optical lens and more particularly an electrochromic ophthalmic lens.

### Introduction

EC devices are devices able to change color upon applying electric energy. Such devices, such as EC lenses, are known. They typically comprise an EC cell providing them with their specific color changing property.

EC cells typically comprise a structure comprising a shell defining a chamber at least a portion of said shell is transparent, for example the shell can comprise sheets of organic or mineral glass. Typical EC cells also comprise at least two electrodes in contact with the inside of the chamber and connected to a power supply. Moreover, the EC cell comprises at least one oxidizing compound and at least one reducing compound that will respectively be reduced and oxidized when electric energy is applied to the cell. At least one of these oxidizing and reducing compounds is an electrochromic compound.

The EC compound is a material having electrochromic properties i.e. that changes color between its reduced and its oxidized state. It can be a mixture of different EC compounds. When an EC compound is reduced or oxidized, there needs to be another redox active compound that can give or accept the electrons that the EC compound respectively accepts or gives. This other redox active compound can itself be an EC compound.

With an EC cell, it is possible to control the redox state and hence the color of the EC compounds comprised in the cell by applying electric energy (e.g. by applying an electric tension between the electrodes). Combining several EC compounds in an EC cell can be useful to adjust the color of the device when no electric energy is applied (passive state) and when electric energy is applied (active state).

The EC cells with which the present disclosure is concerned belong to a specific type of EC cells, namely EC cells comprising an electrochromic formulation. In EC cells comprising an EC formulation, at least part of the EC compounds in the EC cell is contained in a liquid or in a gel filling the space between the electrodes and ensuring the ionic conduction between the electrodes. This gel or liquid containing at least part of the EC compounds is called the EC formulation.

When the EC formulation is in a gel state, the solvent is the solvent of the liquid phase in the gel. When a compound is dissolved in the electrochromic formulation, it is dissolved the liquid phase in the gel and therefore in the solvent.

The EC formulation thus gives at least part of its EC properties to the EC cell. The EC formulation also ensures the ionic conduction between the electrodes.

The EC cells comprising an EC formulation differ from layered-type EC cells, which are defined for example in Alesanco et al. (Materials 2018, 11, 414) as EC cells wherein the EC compounds are deposited as a solid layer on the electrodes of the EC cell. In layered-type EC cells, a component of the EC cell devoid of EC compounds and containing an electrolyte ensures the ionic conduction between the two electrodes.

The EC cells comprising an EC formulation comprise but are not limited to all-in-one-type EC cells, which are defined for example in Alesanco et al. (Materials 2018, 11, 414) as EC cells wherein the EC formulation comprises at least one oxidizing compound and at least one reducing compound that will respectively be reduced and oxidized when an electric field is applied between the electrodes of the cell, at least one of these oxidizing and reducing compounds being an EC compound.

Examples of EC cells comprising an EC formulation that are not all-in-one-type EC cells are EC cells where the EC formulation only comprises reducing compounds and is devoid of oxidizing compounds or where the EC formulation comprises oxidizing compounds and is devoid of reducing compounds. The other redox active component (oxidant or reducer depending on what is comprised in the EC formulation) is then located in a distinct compartment of the EC cell. For instance, it can be deposited as a solid layer on one of the electrodes comprised in the cell.

In most EC cells the electrodes are made of transparent conductive oxides (TCO). TCOs are transparent inorganic metal oxides with good electrical conductivities, such as indium tin oxide (ITO).

Unless otherwise specified, all EC cells discussed in the following are EC cells comprising an EC formulation.

EC devices can include EC cells thus making it possible to modify on demand the color and the transmittance of the device. For example, ski goggles can comprise an EC cell that the user will render more or less dark depending on the light conditions. Augmented reality devices also make use of EC cells, where the EC cells help to improve the contrast and visibility of the images of virtual objects added by the device to the real environment.

In most cases it is preferred that EC cells have a higher transmittance in the passive state (typically, in the case of ski goggles transmissions of at least 65% are required in the passive state) and become darker in the active state. The EC compounds in EC cells are thus preferentially chosen to be colorless or weakly colored in the passive state. It is also often preferred that the combination of the EC compounds in the EC cell gives a neutral color to the EC cell, such as grey or brown, in particular in the active state of the EC cell.

The stability of the color of EC devices remains problematic. Indeed, it has been observed that after a certain number of cycles or a certain amount of time the EC device does not return to its predetermined color in at least some states.

As a solution to this problem, it has been proposed to add small amounts of a so-called redox buffer to the EC formulation (see e.g. documents US6188505 and US20230382938A1). For an EC device based on an EC reducing compound R and an EC oxidizing compound O, said compounds being respectively oxidized into R* or reduced into O* during operation of the EC device, a typical redox buffer B will be either a reducing compound more reducing than compound R and less reducing than compound O* or an oxidizing compound more oxidizing than compound O and less oxidizing than compound R*.

However, even with redox buffers the stability over time of the color of EC devices remains problematic.

### Description

The present disclosure provides the following items.
1. Item 1: A device comprising an electrochromic cell comprising an electrochromic formulation, wherein the electrochromic formulation comprises:
   - A solvent,
   - An ionic electrochromic compound C0 dissolved in the electrochromic formulation, and
   - A lithium salt dissolved or dispersed in the electrochromic formulation.
   said device further comprising means to apply electric energy to the electrochromic cell, said means being configured to be able to maintain the electrochromic cell in at least two states S0 and S1, wherein:
   - In S0, no electric energy is applied to the electrochromic cell,
   - In S1, at least part of compound C0 present in state S0 is excited into a compound C0*, wherein C0 and C0* do not have the same color.

It has been found that, in EC devices based on an EC formulation, when the EC formulation comprises an ionic EC compound, the addition of lithium salts to the EC formulation surprisingly improves the stability of the color of the EC device.

Although the addition of various salts as supporting electrolyte has been suggested in some EC devices, when ionic EC compounds are used in the EC device, a supporting electrolyte is not needed and therefore not added.

Moreover, it has been found that the stabilizing effect on the color of the EC device could not be obtained for any salts. For example, it has been observed that the effect observed with lithium salts was not obtained with sodium salts.

As defined herein, a lithium salt covers any ionic compound or mixture of ionic compounds having lithium counterions. This includes, for example, simple salts, such as LiBF₄ and LiTFSI (TFSI is bistriflimide), polyelectrolytes having lithium counterions or nanoparticles having a charged surface and lithium counterions, polymers or particles grafted with a lithium salt.

The lithium salt may be dissolved in the EC formulation which might be liquid or gel-like.

The lithium salt may be dispersed in the EC formulation, for example when the EC formulation is a gel and lithium is the counterion to the continuous network in the gel (e.g. percolated network of particles or cross-linked polymer network).

In the EC device of the present disclosure, it should be understood the excited state of C0, C0* corresponds to a reduced form of C0 when C0 is an oxidizing compound, and to an oxidized form of C0 when C0 is a reducing compound.
2. Item 2: The device according to item 1, wherein the means to apply electric energy are further configured to be able to maintain the electrochromic cell in another state S2, wherein the part of the compound C0 present in state S0 that is excited into compound C0* is different in for any two states selected among S0, S1, and S2.
3. Item 3: The device according to item 2, wherein the means to apply electric energy are further configured to be able to maintain the electrochromic cell in another state S3, wherein the part of the compound C0 present in state S0 that is excited into compound C0* is different in for any two states selected among S0, S1, S2 and S3.

The fraction of EC compounds that change redox state depends on the electric energy applied. Thus, any means available to the skilled person that may be configured to apply a different energy for each of the states S1, S2 and S3 may be used.

When the device of the invention is an ophthalmic lens, the different states S0, S1, and where applicable S2 and S3, may be chosen so that the lens in these different states are suitable for use in one of the sunglasses categories 0, 1, 2, 3, and 4, as defined in ISO 12312-1. A proper selection for the composition of the EC formulation and the energies applied in each state allow to obtain such an ophthalmic lens.
4. Item 4: The device according to any one of items 1 to 3, wherein the means to apply electric energy comprise a first electrode in contact with the electrochromic formulation, a second electrode in contact with the electrochromic formulation, an electric generator configured to set a tension between said first and second electrode, and means to set said tension at values E0 and E1, and where applicable further able to set said tension at values E2 and E3, said values E0, E1, E2 and E3 being able to maintain S0, S1, S2 and S3 respectively.

When a tension is set between the electrodes of the EC cell, higher tensions correspond to a higher fraction of EC compounds their excited states. Thus, being able to set different tensions allow to maintain different states.
5. Item 5: The device according to any one of items 1 to 4, wherein the device is an electrochromic optical lens.

In the electrochromic ophthalmic or optical lens of the present disclosure, at least a part of the lens, for example a part of the lens that transmits light, changes color upon excitation of C0 into C0*.
6. Item 6: The device according to item 5, wherein the electrochromic optical lens is an electrochromic ophthalmic lens.

As herein defined, an ophthalmic lens is a lens which is designed to be mounted on a frame that can be worn by a wearer in such a way that it places the lens in front of the eye of the wearer. An ophthalmic lens can be used to protect the eye of the wearer or modify his vision (correction of the sight, protection from certain wavelengths, augmented reality, virtual reality, etc.). For example, ophthalmic lenses can be used in visors (such as helmet visors), monocles or in eyeglasses (including sunglasses, goggles and safety glasses). As defined herein, contact lenses are not ophthalmic lenses. Ophthalmic lenses can be uncorrective ophthalmic lenses (also called plano or afocal lenses) or corrective ophthalmic lenses. A corrective lens may be a unifocal, a bifocal, a trifocal or a progressive lens. As defined herein, ophthalmic lenses can be finished lenses of semi-finished lenses. A semi-finished lens undergoes various treatment steps such as surfacing, coloring, coating and edging before being finally included in eyeglasses or in a monocle. A finished lens is ready to be included in the frame (eyeglasses, visors, a monocle, etc.).
7. Item 7: The device according to any one of items 1 to 6, wherein the electrochromic cell is devoid of a solid electrochromic compound.
8. Item 8: The device according to any one of items 1 to 7, wherein compound C0 is cationic.
9. Item 9: The device according to any one of items 1 to 8, wherein compound C0 is an oxidizing compound.
10. Item 10: The device according to any one of items 1 to 9, wherein compound C0* is ionic.
11. Item 11: The device according to item 10, wherein compound C0* is cationic.
12. Item 12: The device according to any one of items 9 to 11, wherein the excitation of C0 into C0* is a one electron reduction.
13. Item 13: The device according to any one of items 1 to 12, wherein compound C0 comprises an aromatic heterocycle H1 comprising a nitrogen N1.

As defined herein, aromatic heterocycles comprise polycyclic aromatic heterocycles, such as a benzothiazole.
14. Item 14: The device according to item 13, wherein compound C0 further comprises an aromatic heterocycle H2 comprising a nitrogen N2.
15. Item 15: The device according to item 14, wherein the aromatic heterocycle H1 and the aromatic heterocycle H2 are in a conjugated system.

A conjugated system is a system of connected p-orbitals with delocalized electrons in a molecule.
16. Item 16: The device according to any one of items 13 to 15, wherein in compound C0 the nitrogen N1 and, where applicable, N2 each carry a + charge.
17. Item 17: The device according to any one of items 13 to 16, wherein the nitrogen N1 and, where applicable, N2 are each linked to a carbon atom not comprised in the aromatic heterocycles H1 and H2, respectively.
18. Item 18: The device according to any one of items 13 to 17, wherein the aromatic heterocycle H1 is of pyridine type.

According to the present disclosure an aromatic heterocycle of pyridine type is a substituted pyridine or a substituted pyridinium.

According to the present disclosure, substituted compound X refers to a compound formally obtained from compound X by substitution of at least one hydrogen atom present in compound X.
19. Item 19: The device according to item 18, wherein compound C0 further comprises an aromatic heterocycle H2 comprising a nitrogen N2 and wherein the aromatic heterocycle H2 is of pyridine type.

An example of a compound C0 according to items 15, 16, 17, 18, and 19 is a compound having the following structure: 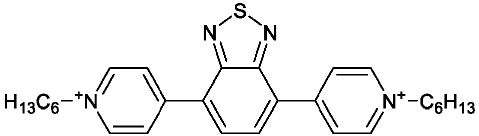 20. Item 20: The device according to item 18, wherein compound C0 further comprises an aromatic heterocycle H2 comprising a nitrogen N2 and wherein the aromatic heterocycle H2 is of benzothiazole type.

According to the present disclosure an aromatic heterocycle of benzothiazole type is a substituted benzothiazole or a substituted benzothiazolium.

An example of a compound C0 according to items 15, 16, 17, 18, and 20 is a compound having the following structure: 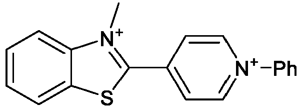 21. Item 21: The device according to item 19, wherein compound C0 is a molecule comprising a substituted 4,4'-bipyridinium group, preferably wherein both nitrogen atoms in the bipyridinium group are linked to a carbon atom not comprised in the bipyridinium group, more preferably wherein one or both nitrogen atoms in the bipyridinium group are linked to a carbon comprised in an aromatic ring, which is not an aromatic ring of the bipyridinium group.

A substituted 4,4'-bipyridinium group, wherein both nitrogen atom in the bipyridinium group are linked to a carbon atom not comprised in the bipyridinium group, is called a viologen.

A substituted 4,4'-bipyridinium group, wherein both nitrogen atom in the bipyridinium group are linked to a carbon comprised in an aromatic ring, which is not an aromatic ring of the bipyridinium group, is called an aryl viologen.

An example of a compound C0, which is a substituted 4,4'-bipyridinium group, wherein one nitrogen atom in the bipyridinium group is linked to a carbon comprised in an aromatic ring, which is not an aromatic ring of the bipyridinium group, and wherein the other nitrogen atom in the bipyridinium group is linked to a carbon atom comprised in an alkyl chain is a compound having the following formula: 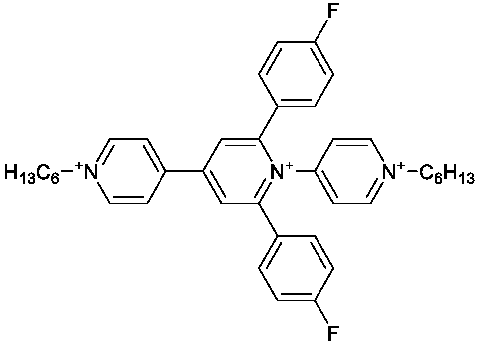 22. Item 22: The device according to any one of items 1 to 21, wherein the electrochromic formulation comprises a second electrochromic oxidizing compound C1 different from C0.

Features defining compound C0 mentioned in the present disclosure may also apply to C1.
23. Item 23: The device according to item, wherein the electrochromic formulation comprises a third electrochromic oxidizing compound C2 different from C0 and C1.

Features defining compound C0 mentioned in the present disclosure may apply to C2.
24. Item 24: The device according to any one of items 1 to 23, wherein the concentration of Li⁺ in the electrochromic formulation is below 1 mol/L, preferably of 0.06 mol/L to 1 mol/L, more preferably of 0.06 mol/L to 0.4 mol/L, even more preferably of 0.08 mol/L to 0.4 mol/L.

It has been observed that the stabilizing effect on the color of the EC device provided by the lithium cations is optimal when the concentration of lithium in the EC formulation is not too high, for example when the concentration of Li⁺ in the EC formulation is below 1 mol/L. The concentration of Li⁺ in the EC formulation is preferably of 0.06 mol/L to 1 mol/L, more preferably of 0.06 mol/L to 0.4 mol/L, even more preferably of 0.08 mol/L to 0.4 mol/L.
25. Item 25: The device according to any one of items 1 to 24, wherein the lithium salt is dissolved in the electrochromic formulation.
26. Item 26: The device according to any one of items 1 to 25, wherein the solvent comprises propylene carbonate.
27. Item 27: The device according to item 26, wherein the solvent is propylene carbonate.

Typically, redox buffers stabilize the color of EC devices by reacting in a redox reaction with the excited state of at least one of the electrochromic compounds in the formulation. Such redox buffers are called herein "reactive redox buffers".

It has been observed that with the use of lithium salts according to the present disclosure, excellent color stability can be obtained even in EC formulations devoid of a reactive redox buffer. This is advantageous because it simplifies the EC formulations and generally makes them less expensive.

In certain cases, reactive redox buffers degrade over time, which reduces their effectiveness in providing color stability. Such is believed to be the case for oxidizing metallocene compounds and in particular for iron(III) metallocene redox buffers (i.e. compounds comprising a substituted or unsubstituted iron(III) metallocene in their structure).
28. Item 28: The device according to any one of items 1 to 27, wherein the electrochromic formulation is devoid of an iron(III) metallocene.
29. Item 29: The device according to item 28, wherein the electrochromic formulation is devoid of an oxidizing metallocene compound.
30. Item 30: The device according to any one of items 1 to 29, wherein the electrochromic formulation is devoid of an oxidizing compound, which is more oxidizing than compound C0 and, where applicable, more oxidizing than compound C1, and, where applicable, more oxidizing than compound C2.
31. Item 31: The device according to any one of items 1 to 30, wherein the electrochromic formulation further comprises a reducing electrochromic compound D.
32. Item 32: The device according to item 31, wherein D is a substituted phenothiazine.
33. Item 33: The device according to item 32, wherein D is 10-methylphenothiazine.

In embodiments of the device of the present disclosure where the EC formulation comprises the compound D, it has been found that further adding a reducing compound E, such as an iron (II) metallocene, which is more reducing than compound D and less reducing than compound C0* and, where applicable, less reducing than compound C1*, and, where applicable, less reducing than compound C2* improved the color stability.
34. Item 34: The device according to any one of items 31 to 33, wherein the electrochromic formulation comprises a reducing compound E, which is more reducing than compound D and less reducing than compound C0* and, where applicable, less reducing than compound C1*, and, where applicable, less reducing than compound C2*.
35. Item 35: The device according to item 34, wherein E is an iron(II) metallocene
36. Item 36: The device according to item 34 or 36, wherein the electrochromic formulation comprises less than 10 mmol/L, preferably less than 5 mmol/L, more preferably from 0.1 mmol/L to 5 mmol/L, for example from 1 mmol/L to 2 mmol/L of compound E.

A thickening agent with or without a plasticizer may be added to the EC formulation for lowering the power consumption of the device.
37. Item 37: The device according to any one of items 1 to 36, wherein the electrochromic formulation comprises, as a thickening agent, a polymer with a mass average molecular weight of at least 50 000 g/mol, preferably of at least 200,000 g/mol, more preferably of at least 250,000 g/mol, more preferably of at least 300,000 g/mol, more preferably of at least 350,000 g/mol, more preferably of at least 400,000 g/mol and preferably of at most 1,000,000 g/mol, more preferably at most 800,000 g/mol, more preferably of at most 650,000 g/mol as measured by size exclusion chromatography using polystyrene standards.
38. Item 38: The device according to item 37, wherein the polymer is polyvinyl acetate.
39. Item 39: The device according to item 37 or 38, wherein the electrochromic formulation further comprises a benzoate plasticizer.
40. Item 40: The device according to item 39, wherein the benzoate plasticizer is a dibenzoate plasticizer
41. Item41: The device according to item 40, wherein the dibenzoate plasticizer is an oligo(propylene glycol) dibenzoate, preferably di(propylene glycol)dibenzoate

### Examples

### Electrochromic formulations

The following mixture is called "base mixture":
- as a solvent: 70% w/w of propylene carbonate,
- as oxidizing EC compounds: 1.3% w/w of a mixture of three aryl viologen compounds,
- as reducing EC compounds: 1.5% w/w of 10-methylphenothiazine,
- as thickening polymer: 7.3% w/w of polyvinylacetate,
- as benzoate plasticizer: between 19.1 and 19.5% w/w of dipropylene glycol dibenzoate
where the percentages are given with respect to the total mass of the final electrochromic formulation (i.e. the formulation comprising the base mixture and further compounds that was actually tested in the EC devices)

Comparative electrochromic formulation 1 comprises:
- the base mixture, and
- as a redox buffer: 0.02% w/w ferrocenium hexafluorophosphate.

Electrochromic formulation according to the present disclosure 1 comprises:
- the base mixture,
- as a redox buffer: 0.03% w/w tertbutyl ferrocene,
- 100 mM lithium tetrafluoroborate.

### Aging test

Each formulation was included in two identical electrochromic lenses. Lenses comprising the electrochromic formulation according to the present disclosure 1 are called LI_C1, and LI_C3. Lenses comprising the comparative electrochromic formulation 1 are called LC_C1, and LC_C3.

Each lens was activated at a given tension U and maintained at this tension for the whole experiment, the spectral transmittance of the lens was then measured (time t0), the lens was then exposed for 50 hours to a Xenon high pressure lamp, then the spectral transmittance was again measured (time tf).

For lenses LI_C1 and LC_C1, U was U1, such that the lenses initially were of suitable for use in sunglasses of category 1.

For lenses LI_C3 and LC_C3, U was U3, such that the lenses initially were of suitable for use in sunglasses of category 3.

From these measurements, Tv and the colorimetric parameters (as defined in the CIE (1976) L*a*b* international colorimetric system) of the lens were measured for each lens at t0 and tf.

Tv, the relative light transmission factor in the visible spectrum is such as defined in the standard ISO 8980-3 and ISO 12312-1 and relates to an average in the 380 - 780 nm wavelength range that is weighted according to the sensitivity of the eye at each wavelength of the range and measured under D65 illumination conditions (daylight).

The color change (ΔE, as defined in the CIE (1976) L*a*b* international colorimetric system) of each lens between t0 and tf was then calculated as well as the change of the relative light transmission factor in the visible spectrum of the lens (ΔTv).

The results are presented in the following table:

| **Lens** | **ΔE** | **ΔTv (%)** |
|---|---|---|
| LC1 | 4.6 | 7 |
| LC3 | 3.3 | 5 |
| LI1 | 0.6 | 2 |
| LI3 | 0.7 | 4 |

## Claims

1. A device comprising an electrochromic cell comprising an electrochromic formulation, wherein the electrochromic formulation comprises:
- A solvent,
- An ionic electrochromic compound C0 dissolved in the electrochromic formulation, and
- A lithium salt dissolved or dispersed in the electrochromic formulation.
said device further comprising means to apply electric energy to the electrochromic cell, said means being configured to be able to maintain the electrochromic cell in at least two states S0 and S1, wherein:
- In S0, no electric energy is applied to the electrochromic cell,
- In S1, at least part of compound C0 present in state S0 is excited into a compound C0*, wherein C0 and C0* do not have the same color.

2. The device according to claim 1, wherein the device is an electrochromic optical lens.

3. The device according to claim 2, wherein the electrochromic optical lens is an electrochromic ophthalmic lens.

4. The device according to any one of claims 1 to 3, wherein compound C0 is cationic.

5. The device according to any one of claims 1 to 4, wherein compound C0 is an oxidizing compound.

6. The device according to any one of claims 1 to 5, wherein compound C0* is ionic.

7. The device according to claim 6, wherein compound C0* is cationic.

8. The device according to any one of claims 1 to 7, wherein the concentration of Li⁺ in the electrochromic formulation is below 1 mol/L, preferably of 0.06 mol/L to 1 mol/L, more preferably of 0.06 mol/L to 0.4 mol/L, even more preferably of 0.08 mol/L to 0.4 mol/L.

9. The device according to any one of claims 1 to 8, wherein the electrochromic formulation is devoid of an iron(III) metallocene.

10. The device according to claim 9, wherein the electrochromic formulation is devoid of an oxidizing metallocene compound.

11. The device according to any one of claims 1 to 10, wherein the electrochromic formulation is devoid of an oxidizing compound, which is more oxidizing than compound C0 and, where applicable, more oxidizing than compound C1, and, where applicable, more oxidizing than compound C2.

12. The device according to any one of claims 1 to 11, wherein the electrochromic formulation further comprises a reducing electrochromic compound D.

13. The device according to claim 12, wherein the electrochromic formulation comprises a reducing compound E, which is more reducing than compound D and less reducing than compound C0* and, where applicable, less reducing than compound C1 *, and, where applicable, less reducing than compound C2*.

14. The device according to claim 13, wherein E is an iron(II) metallocene

15. The device according to claim 13 or 14, wherein the electrochromic formulation comprises less than 10 mmol/L, preferably less than 5 mmol/L, more preferably from 0.1 mmol/L to 5 mmol/L, for example from 1 mmol/L to 2 mmol/L of compound E.
